Europäisches Patentamt

European Patent Office

Office européen des brevets

(11) Publication number: **0 458 016 A1**

## EUROPEAN PATENT APPLICATION

(21) Application number: 91102658.1

(51) Int. Cl.5: **B29C 43/18**, G02F 1/133

(22) Date of filing: 22.02.91

(30) Priority: 24.05.90 JP 134824/90

(43) Date of publication of application:
27.11.91 Bulletin 91/48

(84) Designated Contracting States:
CH DE LI

(71) Applicant: FUJI POLYMERTECH CO., LTD
1-14 Nihonbashi-Honcho 4-Chome
Chuo-Ku, Tokyo(JP)

(72) Inventor: **Sekita, Takayuki**
10-10, Tabata 5-Chome
Kita-ku, Tokyo(JP)

(74) Representative: **Fleuchaus, Leo, Dipl.-Ing. et al**
Melchiorstrasse 42
W-8000 München 71(DE)

(54) Process for manufacturing display sheet with many embedded display elements.

(57) A process for manufacturing a display sheet made of a rubbery material (14) with many flat display elements (16) of LCD, LED or so on embedded therein for use for electronic devices, by integrally molding it in a press mold from a heat curable molding mass (14) together with the display elements, which comprises, using a press mold having a flat upper mold half and a lower mold half having distributed on its inner surface a number of indentations each having a diametral span smaller than that of the flat display element; placing in each of said indentations a compressible insert; inserting therereon in the indentation a metal support member for supporting the display element upon the molding; placing on each of the metal support members thus inserted in the indentation a flat display element of which side faces and rear surface have been coated with an adhesive and which is encased in a cushioning rim frame made of a material capable of heat curing integrally with the molding mass; placing over the lower mold half now having fitted with the display elements a sheet of the heat curable molding mass having perforations located each at a position adapted for encircling each corresponding display element therein; and press-molding the so composed sheet in the press mold under heat curing of the sheet. The display elements are not recessed from the surface of the sheet. With a complete sealing no intrusion of dust particles and moisture from the atmosphere can occur.

F i g.  4

EP 0 458 016 A1

## Background of the Invention

### 1. Field of the Invention

The present invention relates to a process for manufacturing a display sheet made of a rubbery material having embedded therein many flat display elements by integrally molding in a press mold from a heat curable molding mass together with the display elements of LCD, LED etc. having transparent support layers of synthetic resin, glass or so on for use for electronic devices.

### 2. Description of the Prior Art

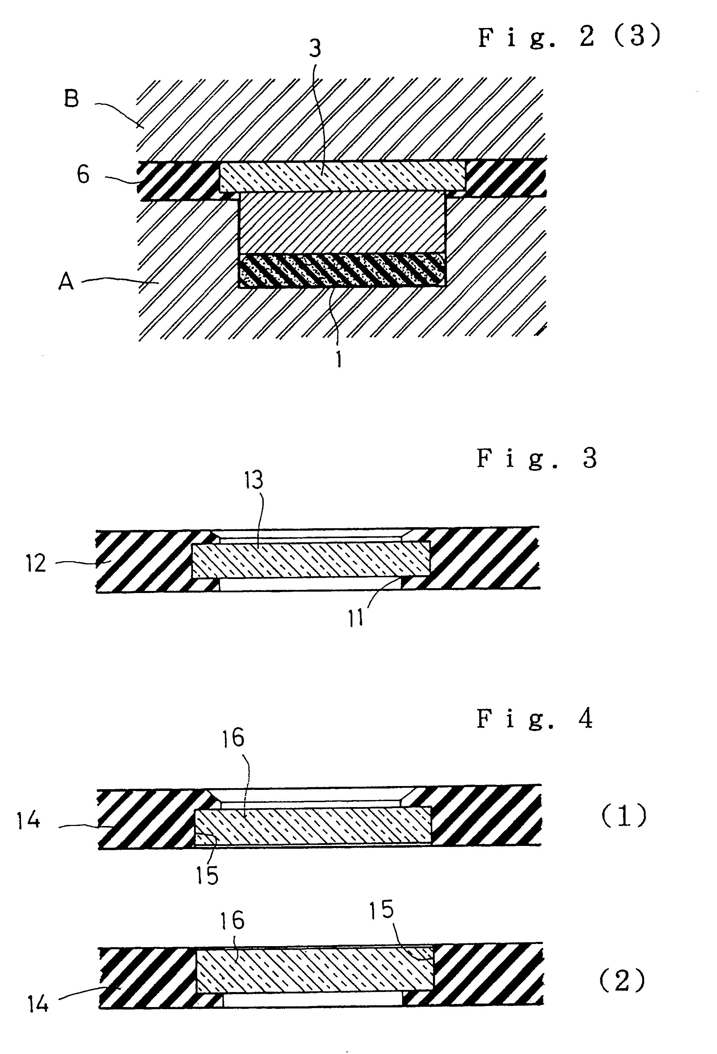

Hitherto, such a display sheet is manufacutued by a method, in which, as shown in the appended Figs. 3 and 4, an already cured molded sheet (12) of rubber having therein many perforations which are formed each with a franged receptacle (15) or a receptacle groove (11) around the circumference of the perforation for receiving the flat small display element (13 or 16) is prepared and the display elements with transparent support layers of glass, synthetic resin or so on are inserted in the so formed receptacle of perforations and fixed therein with an adhesive.

In such prior art method, the display elements are found on the sheet somewhat recessed from the surface of the sheet and the staged corner of such a recession tends to attract particles of dust and smoke and condensed moisture to cause dirty staining on the display elements. In addition, further disadvantages may be brought about, for example, occasional extrusion of the superfluous adhesive out of the receptacle grooves or franges, dislocation or undue location of the display element, irregularity in the arrangement of the display elements and so on, with an increased probability of incomplete sealing of the interface between the display element and the receptacle inner surface resulting in permeation or intrusion of moisture and dust particles from external atmosphere, causing thus premature damage of the internal sensitive instruments

## Summary of the Invention

It is contemplated therefore by the present invention to achieve elimination of the disadvantages of prior art method mentioned above by proposing a novel method for preparing such a display sheet with many embedded flat display elements for use for electronic devices permitting an economical industrial manufacturing thereof.

Thus, an object of the present invention is to provide a process for manufacturing a display sheet made of a rubbery material with many embedded flat display elements having transparent support layer of glass or synthetic resin and distributed over the sheet, said display sheet having a substantially continuous smooth surface with the faces of the flat display elements in alignment with the display sheet surface.

Another object of the present invention is to provide a process for manufacturing a display sheet made of a rubbery material with many embedded flat display elements having transparent support layers of glass or synthetic resin and distributed over the sheet, in which a tight seal of the interfaces between the display elements and the sheet of rubbery material is realized.

A further object of the present invention is to provide a process for manufacturing a display sheet made of a rubbery material with many embedded flat display elements having transparent support layer of glass or synthetic resin and distributed over the sheet, by an integral molding of the display sheet in a press mold from a heat curable molding mass together with the display elements so that they are embedded in the molded display sheet.

## Detailed Description of the Invention

The above objects of the present invention can be attained by the process according to the present invention which is described below.

Thus, the present invention concerns a process for manufacturing a display sheet made of a rubbery material with many flat display elements embedded therein by an integral molding in a press mold from a heat curable molding mass together with the display elements comprising, using a press mold having a flat upper mold half and a lower mold half having distributed on its inner surface a number of indentations each having a diametral span smaller than that of the flat display element; placing in each of said indentations a compressible insert; inserting therereon in the indentation a metal support member for supporting the display element upon the molding; placing on each of the metal support members thus inserted in the indentation a flat display element of which side faces and rear surface have been coated with an adhesive and which is encased in a cushioning rim frame made of a material capable of heat curing integrally with the molding mass; placing over the lower mold half now having fitted with the display elements a sheet of the curable molding mass having perforations located each at a position adapted for encircling said display member therein and press-molding the so composed sheet in the press mold under heat curing of the sheet.

## Brief Description of the Drawings

Figs. 1, 2-(1), 2-(2) and 2-(3) illustrate the procedure sequence of the process according to the present invention in schematic sectional views.

Fig. 3 is an explanatory illustration of a sheet-like display element prepared by conventional method also in a sectional view.

Figs. 4-(1) and 4-(2) show two embodiments of sheet-like display memner prepared by prior art method.

Below, the present invention is described by way of a preferred embodiment with reference to the appended Drawings.

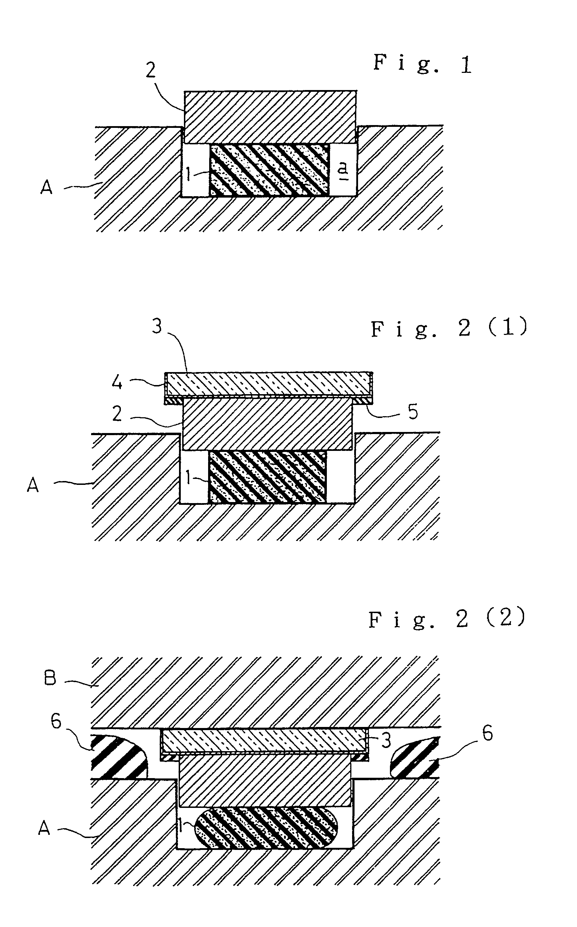

As shown in Fig. 1, the process of the present invention for manufacturing a display sheet by integrally molding from a curable molding mass together with many flat display elements to be embedded in the molded display sheet uses a press mold of which lower mold half (A) has on its mold inner face a number of indentations (a) having each a diametral span or a diameter smaller than that of the display element (3). In each of the mold indentations (a), a compressible insert (1) made of a mat, spring, sponge, bag, baloon etc. is placed and thereon is then inserted a metal support member (2) for supporting the display element (3). The metal support member (2) has a diameter (if it has a cylindrical form) adapted to be inserted in the indentation (a) smoothly but smaller than that of the display element (3). The display element (3) is composed of a small liquid crystal display (LCD) disc having tranparent support layers of glass, synthetic resin or so on and is coated on its circumferencial side faces and over its rear surface with a layer of a heat curable adhesive (4) based on, for example, thermosetting silicone rubber. The display element (3) is preferably encased in a cushioning rim frame (5) of a thickness of, for example, about 1 mm made of a material capable of heat curing integrally with the molding mass (6), to thereby be ready for being mounted on the metal support member (2) for press-molding, as shown in Figs. 2-(1) and 2-(2). The display element (3) has a diametral span greater than that of the indentation (a) so as not to be pressed into the indentation (a) upon the press molding. The so pretreated display element (3) is placed on each of the metal support members (2) inserted in the indentations (a). Then, a sheet of curable molding mass (6) of, preferably, a crude synthetic or natural rubber having perforations at the portions corresponding to the display elements (3) is placed on the lower mold half (A) having fitted thereon with the display elements (3), in such a manner that each perforation of the sheet encircles each corresponding display element (3). Thereafter, the upper mold half (B) is pressed onto the so composed sheet [Fig. 2-(2)] with heating to cause an integral molding of the compsite molding mass sheet. The molding mass sheet (6) is squeezed and spread by being pressed by the press mold to thereby completely fill up the interstices between the flat display elements (3) and the edges of the perforations of molding mass (6) to reach an intimate occlusion of the display elements (3) before it is cured by heat.

The compressible insert (1) is compressed upon the press-molding and deforms so as to cushion the pressing force imposed onto the display element (3), so that the molding mass (6) can be spread so as to envelop the display elements (3) completely and is cured holding them firmly with an extremely tight seal at the interfaces between the display elements and the sheet material without occurrence of displacement or irregular arrangement of the display elements. According to the present invention, it is able to attain an absolute adhesion of the display elements with the cured molded material without occurrence of any gap between them, as contrasted to the prior art method.

A marked prevention of the staining by adsorption of particles of dust and smog can be reached with simultaneous prevention of intrusion of moisture and dust, whereby a damage of sensitive internal instruments due to the intrusion of moisture and dust can be avoided.

Due to the smooth and continuous surface without recesses at the display members, cleaning of the display element can be relized easily.

By the cushioning effect of the compressible insert employed in accordance with the present invention, breaking or crushing damage of the display element having fragile glass supports can be avoided to a remarkable degree.

**Claims**

1. A process for manufacturing a display sheet made of a rubbery material with many flat display elements embedded therein by an integral molding in a press mold from a heat curable molding mass together with the display elements comprising, using a press mold having a flat upper mold half (B) and a lower mold half (A) having distributed on its inside surface a number of indentations (a) each having a diametral span smaller than that of the flat display element; placing in each of said indentations (a) a compressible insert (1); inserting therereon in the indentation (a) a metal support member (2) for supporting the display element (3) upon the molding; placing on each of the metal support members (2) thus inserted in the indentation a flat display element (3) of which side faces and rear surface have been coated with an adhasive (4) and which is encased in a cushioning rim frame (5) made of a material capable of heat curing integrally with the molding mass; placing over the lower mold half (A) now having fitted with the display elements (3) a sheet of the heat curable molding mass (6) having perforations located each at a position adapted for encircling each corresponding display element (3) therein; and press-molding the so composed sheet in the press mold under heat curing of the sheet.

F i g .  1

F i g .  2 (1)

F i g .  2 (2)

Fig. 2 (3)

Fig. 3

Fig. 4

(1)

(2)

European
Patent Office

**EUROPEAN SEARCH
REPORT**

Application Number

**EP 91 10 2658**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-2 737 732 (SIEMENS) <br> * figure 2, claim 7 * | 1 | B 29 C 43/18 <br> G 02 F 1/133 |
| Y | EP-A-0 253 909 (POLYNORM) <br> * figure 2, abstract * | 1 | |
| A | GB-A-2 214 860 (SUMITOMO) <br> * figure 5c; page 8, lines 22-26 * | 1 | |
| A | WO-A-8 902 818 (PILKINGTON VISIONCARE) <br> * figure 1, abstract * | 1 | |

TECHNICAL FIELDS
SEARCHED (Int. Cl.5)

B 29 C
G 02 F
G 09 F

The present search report has been drawn up for all claims

| Place of search | Date of completion of search | Examiner |
|---|---|---|
| Berlin | 21 August 91 | BREUSING J |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

&: member of the same patent family, corresponding
document